# EUROPÄISCHE PATENTSCHRIFT

(11) **EP 1 449 288 B1**
(45) Veröffentlichungstag und Bekanntmachung des Hinweises auf die Patenterteilung: **19.09.2007**
(21) Anmeldenummer: 02803483.3
(22) Anmeldetag: 12.11.2002
(51) Int. Cl.: H02K 1/30, D21F 1/48, F16M 1/04, H02K 1/08

(54) **POLRAD**
ROTOR
ROTOR

(30) Priorität: 22.11.2001 EP 01127822
(43) Veröffentlichungstag der Anmeldung: 25.08.2004
(73) Patentinhaber: Alstom Technology Ltd, 5400 Baden (CH)
(72) Erfinder: NEFF, Ueli, CH-9050 Appenzell AI (CH)
(86) Internationale Anmeldenummer: PCT/IB2002/004720
(87) Internationale Veröffentlichungsnummer: WO 2003/044925

(56) Entgegenhaltungen:
- DE-A- 1 538 704
- DE-A- 2 229 506
- DE-B- 1 103 454
- DE-B- 1 196 779
- US-A- 4 258 280

## Beschreibung

### TECHNISCHES GEBIET

Die vorliegende Erfindung bezieht sich auf das Gebiet der elektrischen Maschinen. Sie betrifft ein Polrad gemäss dem Oberbegriff des Anspruchs 1.

Ein solches Polrad ist z.B. aus der Druckschrift DE-A1-28 52 980 bekannt.

### STAND DER TECHNIK

Bei Polrädern, wie sie aus der eingangs genannten DE-A1-28 52 980 oder der EP-A1-0 334 020 oder der US-A-4,143,457 bekannt sind, wird ein aus einzelnen Kranzblechen aufgeschichteter Schichtkranz durch Verkeilen mit einem Radstern ("Rotorspider") verbunden, der um eine zentrale Achse drehbar gelagert ist. Die Schichtkranzverkeilung besteht - je nach Herstellungsart des Radsterns - meist aus einem Keilträger, einem Keil und einem oder mehreren Gegenkeilen (siehe z.B. die EP-A1-0 334 020 oder die US-A-4,143,457). Der Radstern ist im Bereich der Verbindung zum Schichtkranz eine starre Struktur, bestehend aus zwei oder mehreren Scheiben, den radialen Rippen (die auch aus der radialen Richtung heraus gekippt oder "oblique" angeordnet sein können) und den Keilträgern (siehe z.B. die Fig. 2 der DE-A1-28 52 980). Die Rippen sind mit den Scheiben und den Keilträgern verschweisst und können deshalb im Bereich der Verbindung zum Schichtkranz auch bei einer "obliquen" Anordnung nicht als "oblique" Elemente funktionieren. Der Keil wird mit dem Gegenkeil (oder den Gegenkeilen) durch Reibschluss mit dem Schichtkranz starr verbunden. Der Aufbau in DE 1538704 verwendet Stahlleisten zur Fixierung des Keils aus Radstern.

Die Kranzbleche haben rechteckige Aussparungen, damit Keil und Gegenkeil(e) aufgenommen werden können. Im Kranzblech können zwei oder mehrere Aussparungen vorkommen. Auch können pro Blech ein oder mehrere Keile im Eingriff sein. Der Keil und Keilträger können sich relativ zueinander bewegen. Dies ist wichtig, denn ohne die Möglichkeit der Relativbewegung wäre die mechanische Beanspruchung des Radsterns und des Rotorkranzes im Betrieb (Fliehkraft, unterschiedliche Temperaturverteilung im Schichtkranz und Radstern) zu hoch.

Nachteilig ist bei der bekannten Schichtkranzverkeilung einerseits der durch die Keilträger, Keile und Gegenkeile verursachte relativ grosse konstruktive und fertigungstechnische Aufwand. Andererseits sind die Gleitbewegungen zwischen Keil und Keilträger in der Praxis nur schwer zu beherrschen. Schliesslich wird nicht selten der Schichtkranz auf den Radstern aufgeschrumpft (siehe z.B. die US-A-4,143,457). Durch den Schrumpf werden aber im Stillstand des Polrades (Rotors) hohe mechanische Spannungen im Radstern induziert, was eine steifere und teurere Konstruktion des Radsternes erforderlich macht.

### DARSTELLUNG DER ERFINDUNG

Es ist daher Aufgabe der Erfindung, ein Polrad mit einer Schichtkranzverkeilung zu schaffen, welches die Nachteile bekannter Lösungen vermeidet und sich insbesondere durch einen vereinfachten Aufbau und eine vereinfachte Herstellung auszeichnet.

Die Aufgabe wird durch die Gesamtheit der Merkmale des Anspruchs 1 gelöst. Das erfindungsgemässe Polrad zeichnet sich dadurch aus, dass die Keile auf der dem Schichtkranz zugewandten Seite schwalbenschwanzförmig ausgebildet sind, und dass die Kranzbleche Aussparungen aufweisen, in welche die Keile mit ihrer Schwalbenschwanzform unter Bildung einer starren Verbindung eingreifen, wobei die Kranzbleche jeweils eine Mehrzahl von Aussparungen aufweisen, und jede der Aussparungen auf der einen Seite durch eine schwalbenschwanzförmige Auflageflanke und auf der anderen Seite durch eine rechtwinklig angeordnete Flanke begrenzt ist.

In einer ersten Weiterbildung weist der Radstern schrägstehende ("oblique") Rippen auf, und die Keile sind mit den Rippen fest verbunden, insbesondere verschweisst.

In einer zweiten Weiterbildung weist der Radstern radiale Rippen auf, an den Rippen sind Keilträger befestigt, und die Keile sind in den Keilträgern gleitend gelagert.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer Seitenansicht einen Ausschnitt von einem Polrad mit schräggestellten ("oblique") Rippen gemäss einem ersten Ausführungsbeispiel der Erfindung;
- Fig. 2: die Draufsicht von oben auf das Polrad nach Fig. 1
- Fig. 3: in den Teilfiguren (a) bis (c) verschiedene Beispiele für die Gestaltung der Kranzbleche beim Polrad gemäss Fig. 2; und
- Fig. 4: in einer zu Fig. 2 vergleichbaren Darstellung ein zweites Ausführungsbeispiel des erfindungsgemässen Polrades mit radial orientierten Rippen.

### WEGE ZUR AUSFÜHRUNG DER ERFINDUNG

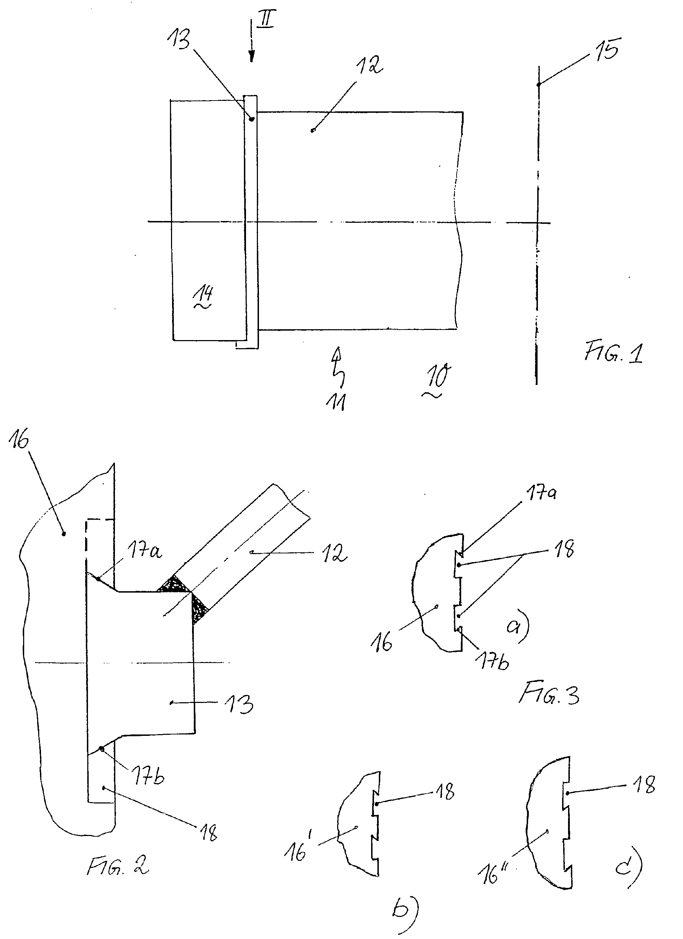

In Fig. 1 und 2 ist in der Seitenansicht und in der Draufsicht von oben ein Ausschnitt eines Polrades gemäss einem ersten bevorzugten Ausführungsbeispiel der Erfindung für Radkränze mit schräg verlaufenden Speichen (Rippen) dargestellt. Das um eine Achse 15 drehbare Polrad 10 weist einen Radstern 11 mit einer Mehrzahl von schräg ("oblique") nach aussen abgehenden Rippen 12 auf, die jeweils mittels Keilen 13 mit einem aus einzelnen Kranzblechen 16, 16', 16" (Fig. 3) aufgebauten Schichtkranz 14 verbunden sind. Der Schichtkranz 14 umgibt den Randstern 11 konzentrisch. Die neuartige Schichtkranzverkeilung umfasst nur noch jeweils einen Keil 13, welcher eine Schwalbenschwanzform aufweist (Fig. 2). Im Gegensatz zur bekannten Lösung haben die Kranzbleche 16, 16', 16" Aussparungen 18, deren eine Flanke - wie bisher - eine rechteckige Form hat, deren andere Flanke aber schwalbenschwanzförmig ausgeführt ist (Fig. 3(a)bis (c)). Nur diese Auflageflanke (17a, b in Fig. 2) kann zur Verbindung zwischen Kranzblech 16 und Keil 13 verwendet werden. Im Kranzblech 16, 16', 16" können zwei oder mehrere Aussparungen 18 vorkommen. Auch können pro Kranzblech ein oder mehrere Keile 13 im Eingriff sein.

Im einfachsten Fall wird das Kranzblech gemäss Fig. 3(a) ausgeführt (Kranzblech 16). Der Schichtkranz 14 wird durch gegenseitige Verschichtung der Kranzbleche 16 aufgebaut. Falls nötig, kann das Kranzblech auch gemäss Fig. 3(b) ausgeführt werden (Kranzblech 16'). Hier wird zusätzlich zur gegenseitigen Verschichtung das Kranzblech beim Aufeinanderschichten auch noch gekehrt (Kranzblech 16" in Fig. 3(c)). Im Grunde genommen kann jede Variation (zwei oder mehrere Aussparungen 18, Auflageflanke 17a, b links oder rechts, ein oder mehrere Keil(e) pro Kranzblech im Eingriff) vorkommen.

Der Grundsatz dabei ist immer, dass die starre Verbindung zwischen Keil 13 und Schichtkranz 14 durch die Form der Kranzbleche und durch die Wahl der Verschichtung sowohl auf der linken als auch auf der rechten Auflageflanke 17a, b des Keiles 13 zu liegen kommt. Die Kranzbleche 16, 16', 16" können sowohl gelasert als auch gestanzt werden. Der Radstern 11 besteht im Bereich der Verbindung zum Schichtkranz 14 aus "oblique" angeordneten Rippen 12, welche mit dem Keil 13 starr verbunden (z.B. verschweisst) sein müssen. Die in Fig. 1 der DE-A1-28 52 980 erkennbaren Scheiben im Bereich der Verbindung zwischen Schichtkranz und Radstern entfallen. Nur durch diese Anordnung funktionieren die Rippen 12 auch tatsächlich als "oblique" Elemente und reduzieren die mechanische Beanspruchung im Keil 13 und Schichtkranz 14 im Betrieb des Polrades 10 (Fliehkraft, unterschiedliche Temperaturverteilung im Schichtkranz 14 und Radstern 11).

Die Vorteile der neuen Schichtkranzverkeilung gemäss Fig. 1-3 sind:
- kein teurer Keilträger mit Keil und Gegenkeil nötig;
- einfache Verbindung zwischen Schichtkranz und Keil;
- keine schwer zu beherrschenden Gleitbewegungen mehr möglich;
- durch die starre Verbindung zwischen Schichtkranz und Radstern wird ein manchmal gefordertes Schrumpfen des Schichtkranzes überflüssig.

Das oben erläuterte Ausführungsbeispiel funktioniert nur bei einer "obliquen" Verbindung zwischen Schichtkranz 14 und Radstern 11 (schräge Rippen 12).

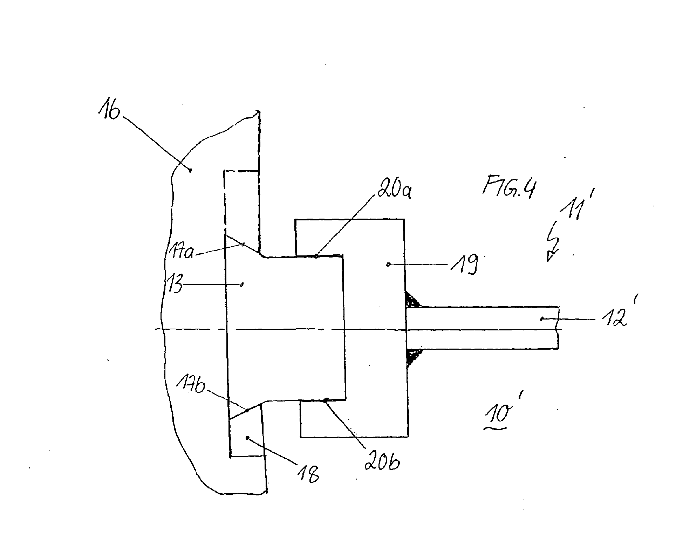

Ein weiteres bevorzugtes Ausführungsbeispiel ist in den Fig. 4 und 5 dargestellt. Die Schichtkranzverkeilung zwischen Radstern 11' und dem Schichtkranz besteht bei diesem Polrad 10' jeweils aus einem Keilträger 19, welcher dieselbe Form hat wie bei der z.B. aus der DE-A1-28 52 980 bekannten Verkeilung, und einem Keil 13, welcher identisch ist zu Fig. 2. Die starre Verbindung zwischen Schichtkranz und Keil 13 ist analog zu Fig. 2, und die Form der Kranzbleche 16 (bzw. 16', 16") ist dieselbe wie in Fig. 3. Der Radstern 11' unterscheidet sich vom Radstern 11 aus Fig. 2 dadurch, dass die Rippen 12' radial sind. Damit wird einerseits die herkömmliche Verkeilungsart (mit Keil und Gegenkeil(en)) ersetzt, andererseits können sich Keil 13 und Keilträger 19 relativ zueinander entlang von Gleitflächen 20a,b bewegen. In diesem Ausführungsbeispiel ist somit die starre Verbindung durch einen schwalbenschwanzförmigen Keil kombiniert mit einer gleitenden Lagerung des Keil in einem Keilträger.

Dieses Ausführungsbeispiel funktioniert nicht bei einer "obliquen" Verbindung zwischen Schichtkranz und Radstern (schräge Rippen).

### BEZUGSZEICHENLISTE

- 10, 10': Polrad
- 11,11': Radstern (Rotorspider)
- 12,12': Rippe
- 13: Keil
- 14: Schichtkranz
- 15: Achse
- 16,16',16": Kranzblech
- 17a,b: Auflageflanke
- 18: Aussparung (Kranzblech)
- 19: Keilträger
- 20a,b: Gleitfläche

## Patentansprüche

1. Polrad (10, 10') mit einem um eine Achse (15) drehbar gelagerten, eine Mehrzahl von Rippen (12, 12') umfassenden Radstern (11, 11'), und einem den Radstern (11, 11') konzentrisch umgebenden, aus einzelnen Kranzblechen (16, 16', 16") zusammengesetzten Schichtkranz (14), welcher mit dem Radstern (11, 11') mittels Keilen (13) über eine Schichtkranzverkeilung verbunden ist, wobei die Keile (13) und die Kranzbleche (16, 16', 16") so ausgebildet sind, dass sie unter Bildung einer starren Verbindung formschlüssig ineinandergreifen, die Keile (13) auf der dem Schichtkranz (14) zugewandten Seite schwalbenschwanzförmig ausgebildet sind, und die Kranzbleche (16, 16', 16") Aussparungen (18) aufweisen, in welche die Keile (13) mit ihrer Schwalbenschwanzform unter Bildung einer starren Verbindung eingreifen, **dadurch gekennzeichnet, dass** die Kranzbleche (16, 16', 16") jeweils eine Mehrzahl von Aussparungen (18) aufweisen, und dass jede der Aussparungen (18) auf der einen Seite durch eine schwalbenschwanzförmige Auflageflanke (17a, b) und auf der anderen Seite durch eine rechtwinklig angeordnete Flanke begrenzt ist.

2. Polrad nach Anspruch 1, **dadurch gekennzeichnet, dass** bei den Aussparungen (18) der Kranzbleche (16', 16") die schwalbenschwanzförmigen Auflageflanken (17a, b) stets auf derselben Seite angeordnet sind, und dass die Kranzbleche (16', 16") im Schichtkranz (14) beim Aufeinanderschichten gegenseitig verschichtet und abwechselnd gekehrt angeordnet sind.

3. Polrad nach Anspruch 2, **dadurch gekennzeichnet, dass** bei den Aussparungen (18) der Kranzbleche (16) die schwalbenschwanzförmigen Auflageflanken (17a, b) stets auf abwechselnden Seiten angeordnet sind, und dass die Kranzbleche (16) im Schichtkranz (14) beim Aufeinanderschichten gegenseitig verschichtet angeordnet sind.

4. Polrad nach einem der Ansprüche 1 bis 3, **dadurch gekennzeichnet, dass** der Radstern (11) schrägstehende ("oblique") Rippen (12) aufweist, und dass die Keile (13) mit den Rippen (12) fest verbunden, insbesondere verschweisst, sind.

5. Polrad nach einem der Ansprüche 1 bis 3, **dadurch gekennzeichnet, dass** der Radstern (11') radiale Rippen (12') aufweist, dass an den Rippen (12') Keilträger (19) befestigt sind, und dass die Keile (13) in den Keilträgern (19) gleitend gelagert sind.

## Claims

1. Rotor (10, 10') having a rotor spider (11, 11'), which is mounted such as it can rotate about an axis (15) and has two or more ribs (12, 12'), and having a laminated rim (14), which concentrically surrounds the rotor spider (11, 11') and is composed of individual rim laminates (16, 16', 16"), and which is connected to the rotor spider (11, 11') by means of wedges (13) via a laminated rim wedge system, wherein the wedges (13) and the rim laminates (16, 16', 16") are designed such that they engage in one another in an interlocking manner, forming a rigid connection, the wedges (13) are in the form of dovetails on the side facing the laminated rim (14), and the rim laminates (16, 16', 16") have cutouts (18) in which the dovetail shape of the wedges (13) engages forming a rigid connection, **characterized in that** the rim laminates (16, 16', 16") each have two or more cutouts (18), and **in that** each of the cutouts (18) is bounded on one side by a contact flank (17a, b) in the form of a dovetail and on the other side by a flank which is arranged at right angles.

2. Rotor according to Claim 1, **characterized in that** the dovetailed contact flanks (17a, b) are always arranged on the same side in the cutouts (18) in the rim laminates (16', 16") and **in that** the rim laminates (16', 16") in the laminated rim (14) are arranged in a mutually laminated form and alternately reversed while being formed into layers on top of one another.

3. Rotor according to Claim 2, **characterized in that** the dovetailed contact flanks (17a, b) are always arranged on alternate sides in the cutouts (18) in the rim laminates (16), and **in that** the rim laminates (16) are arranged in a mutually laminated form while being formed into layers on top of one another in the laminated rim (14).

4. Rotor according to one of Claims 1 to 3, **characterized in that** the rotor spider (11) has oblique ribs (12), and **in that** the wedges (13) are firmly connected to the ribs (12), in particular by welding.

5. Rotor according to one of Claims 1 to 3, **characterized in that** the rotor spider (11') has radial ribs (12'), **in that** wedge supports (16) are attached to the ribs (12'), and **in that** the wedges (13) are mounted in the wedge supports (19) such that they can slide.

## Revendications

1. Roue polaire (10, 10') avec un moyeu de support de rotor (11, 11') comprenant une pluralité de côtes (12, 12'), disposé de façon à effectuer une rotation autour d'un axe (15), et une couronne stratifiée (14) composée de plusieurs tôles stratifiées (16, 16', 16"), qui entoure de façon concentrique le moyeu de support de rotor (11, 11') et qui est reliée au moyeu de support de rotor (11, 11') au moyen de clavettes (13) par un clavetage de couronne stratifiée, les clavettes (13) et les tôles stratifiées (16, 16', 16") étant conçues de façon à engrener les unes avec les autres par complémentarité de forme en formant une liaison rigide, les clavettes (13) étant conçues en forme de queues de pies du côté tourné vers la couronne stratifiée (14), et les tôles stratifiées (16, 16', 16") comportant des évidements (18), dans lesquels s'engagent les clavettes (13) par leur forme en queue de pie en formant une liaison rigide, **caractérisée en ce que** les tôles stratifiées (16, 16', 16") comportent chacune une pluralité d'évidements (18), et **en ce que** chacun des évidements (18) est limité d'un côté par un flanc d'appui (17a,b) en forme de queue de pie et de l'autre côté par un flanc disposé à angle droit.

2. Roue polaire selon la revendication 1, **caractérisée en ce que** dans les évidements (18) des tôles stratifiées (16', 16"), les flancs d'appui (17a,b) en forme de queues de pie sont toujours placés du même côté, et **en ce que** les tôles stratifiées (16', 16") dans la couronne stratifiée (14) sont stratifiées mutuellement lors de la superposition des couches et renversées de façon alternative.

3. Roue polaire selon la revendication 2, **caractérisée en ce que** dans les évidements (18) des tôles stratifiées (16), les flancs d'appui (17a,b) en forme de queues de pie sont toujours placés en alternance d'un côté et de l'autre, et **en ce que** les tôles stratifiées (16) dans la couronne stratifiée (14) sont stratifiées mutuellement lors de la superposition des couches.

4. Roue polaire selon l'une des revendications 1 à 3, **caractérisée en ce que** le moyeu de support de rotor (11) comporte des côtes (12) disposées en biais (obliques), et **en ce que** les clavettes (13) sont reliées fixement aux côtes (12), notamment par soudage.

5. Roue polaire selon l'une des revendications 1 à 3, **caractérisée en ce que** le moyeu de support de rotor (11') comporte des côtes radiales (12'), **en ce que** des supports de clavette (19) sont fixés aux côtes (12') et **en ce que** les clavettes (13) sont disposées de façon coulissante dans les supports de clavette (19).
